# FASCICULE DE BREVET EUROPEEN

(11) **EP 2 554 480 B1**
(45) Date de publication et mention de la délivrance du brevet: **02.09.2015**
(21) Numéro de dépôt: 12305938.8
(22) Date de dépôt: 31.07.2012
(51) Int. Cl.: B64D 33/02, F01D 21/04, F02C 7/04, F02C 7/047

(54) **Dispositif de liaison plus particulièrement adapté pour assurer la liaison entre une entrée d'air et une motorisation d'une nacelle d'aéronef**
Speziell angepasste Verbindungsvorrichtung zur Sicherstellung der Verbindung zwischen einem Lufteinlass und der Motorisierung einer Luftfahrzeuggondel
Linking device more specifically suited to providing the link between an air intake and an engine of an aircraft nacelle

(30) Priorité: 05.08.2011 FR 1157195
(43) Date de publication de la demande: 06.02.2013
(73) Titulaire: Airbus Opérations SAS, 31060 Toulouse (FR)
(72) Inventeur: Porte, Alain, 31770 Colomiers (FR); Dida, Stéphane, 31470 Fontenilles (FR); Fargues, Matthieu, 82000 Montauban (FR); Marro, Martial, 31830 Plaisance Du Touch (FR)
(74) Mandataire: Fantin, Laurent

(56) Documents cités:
- EP-A1- 1 369 555
- WO-A1-2008/006959
- US-A1- 2004 101 384
- US-A1- 2008 078 612

## Description

La présente invention se rapporte à un dispositif de liaison plus particulièrement adapté pour assurer la liaison entre une entrée d'air et une motorisation d'une nacelle d'aéronef.

Un ensemble propulsif d'aéronef comprend une nacelle dans laquelle est disposée de manière sensiblement concentrique une motorisation reliée par l'intermédiaire d'un mât au reste de l'aéronef.

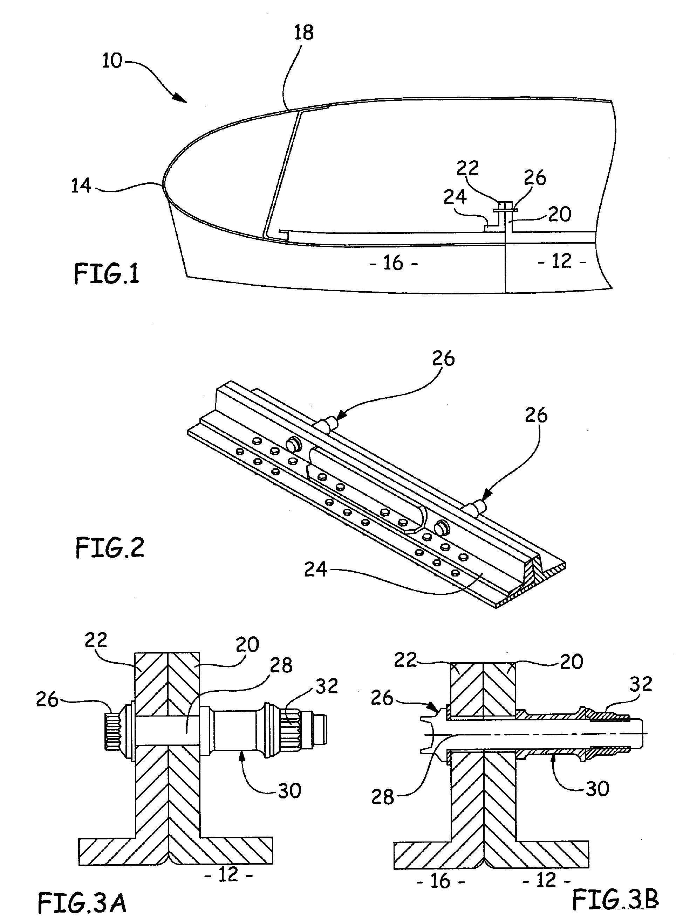

Comme illustré sur la figure 1, la nacelle comprend à l'avant une entrée d'air 10 permettant de canaliser un flux d'air en direction de la motorisation 12.

L'entrée d'air 10 comprend une lèvre 14 dont la surface en contact avec les flux aérodynamiques est prolongée à l'intérieur de la nacelle par un conduit intérieur 16 et à l'extérieur de la nacelle par une paroi extérieure 18.

L'entrée d'air 10 est reliée à la motorisation 12 par un dispositif de liaison illustré en détails sur les figures 2, 3A et 3B. Ce dispositif de liaison comprend au niveau de la motorisation une première collerette annulaire 20 solidarisée à une seconde collerette annulaire 22 d'un panneau délimitant le conduit 16 ou d'une pièce intercalaire 24, appelée bride, reliée au panneau délimitant le conduit 16, comme illustré sur la figure 2. Les deux collerettes 20 et 22 sont plaquées l'une contre l'autre et maintenues ainsi par des éléments de liaison 26, par exemple des boulons ou des rivets, qui traversent les collerettes 20, 22 et s'étendent parallèlement à l'axe longitudinal de la nacelle.

Selon un mode de réalisation illustré sur la figure 3A, les boulons ou rivets 26 comprennent une tige 28 dont le diamètre peut être ajusté à celui des trous de passage ménagés dans les collerettes annulaires 20 et 22.

Selon un second mode de réalisation illustré sur la figure 3B, le diamètre des trous de passage ménagés dans les collerettes annulaires 20 et 22 peut être légèrement supérieur à celui de la tige 28 des boulons ou rivets 26. Ce jeu d'environ 1 mm entre les trous de passage et les boulons ou rivets 26 autorise un mouvement relatif entre les deux éléments reliés.

Dans les deux cas, les trous de passage sont cylindriques.

Le dispositif de liaison et plus particulièrement les boulons ou rivets 26 sont dimensionnés pour pallier aux éventuels risques d'incidents, comme par exemple le bris d'une pale de la soufflante.

Dans ce cas, le conduit de la motorisation peut se déformer sur toute ou une partie de sa périphérie. Lors de ces déformations, les trous de passage de la collerette annulaire de la motorisation ne sont plus disposés au droit de ceux de l'entrée d'air. Dans cette configuration, les boulons ou rivets 26 subissent notamment des contraintes de cisaillement relativement importantes, nettement supérieures aux contraintes subies en fonctionnement normal. Même si le second mode de réalisation autorise un mouvement relatif entre les deux pièces reliées en raison du jeu présent autour des boulons ou rivets 26, ce jeu est nettement inférieur au mouvement relatif entre les deux pièces reliées en cas d'incident comme le bris d'une pale. Dans le cas du second mode de réalisation avec jeu, on constate que les contraintes de cisaillement sont au moins égales à celles présentes pour le premier mode de réalisation voire supérieures.

Pour résister à de telles contraintes, le dispositif de liaison comprend un nombre donné de boulons ou rivets 26 avec un diamètre donné.

Compte tenu de la résistance d'un boulon ou rivet 26 dans un montage conforme aux modes de réalisation illustrés sur les figures 3A et 3B, cela conduit à prévoir pour le dispositif de liaison un grand nombre de boulons ou rivets 26 et/ou des boulons ou rivets 26 avec un diamètre important, ce qui engendre une masse embarquée plus importante et par conséquent une consommation énergétique plus importante de l'aéronef.

Selon une autre problématique, les déformations du conduit de la motorisation tendent à se propager en direction du conduit 16 de l'entrée d'air. Par conséquent, il est nécessaire de tenir compte de ces éventuelles déformations lors de la conception du conduit 16 de l'entrée d'air qui est généralement en matériau composite et intègre un système de traitement acoustique.

Pour limiter la propagation des déformations de la collerette annulaire 20 de la motorisation vers la collerette 22 de l'entrée d'air, il est possible de prévoir un filtre au niveau des éléments de liaison 26. Pour chaque dispositif de liaison, ce filtre comprend au moins un fourreau déformable 30 enfilé sur la tige 28 de l'élément de liaison 26. Selon l'exemple illustré sur la figure 3A, le fourreau déformable 30 est intercalé entre la collerette annulaire 20 reliée à la motorisation et un écrou 32 de l'élément de liaison 26. Ce fourreau déformable 30 a un diamètre intérieur ajusté à celui de la tige 28 et comprend en partie centrale une épaisseur relativement faible de manière à pouvoir se déformer, notamment par flambage. Cet agencement permet d'augmenter l'énergie absorbée par déformation du dispositif de liaison. Il permet également de limiter la propagation des déformations selon la direction axiale.

Toutefois en cas de bris d'une pale, les déformations les plus importantes sont orientées selon la direction radiale. Or, les effets du fourreau déformable 30 selon cette direction sont limités.

Aussi, la présente invention vise à proposer un dispositif de liaison plus particulièrement adapté pour relier une motorisation et une entrée d'air d'une nacelle d'aéronef permettant de limiter la propagation des déformations entre les deux éléments assemblés, notamment selon la direction radiale. US 2004/0101384 A1 est considéré l'état de la technique la plus proche. A cet effet, l'invention a pour objet un dispositif de liaison entre un premier conduit d'une entrée d'air d'une nacelle d'aéronef et un second conduit d'une motorisation disposée dans ladite nacelle, les deux conduits étant disposés bout à bout, ledit dispositif de liaison comportant une collerette annulaire reliée à l'entrée d'air, une collerette annulaire reliée à la motorisation plaquée contre ladite collerette annulaire de l'entrée d'air, une pluralité de trous de passage ménagés dans les collerettes annulaires et disposés au droit les uns des autres et des premiers éléments de liaison dont les tiges sont logées dans les trous de passage, permettant de relier lesdites collerettes annulaires, **caractérisé en ce que** pour au moins un premier élément de liaison, le trou de passage d'une des collerettes annulaires a un diamètre nettement supérieur à celui de la tige permettant un débattement de ladite tige et en ce qu'une lame est intercalée entre ledit premier élément de liaison et ladite collerette annulaire, la lame comprenant au moins deux parties, au moins une partie centrale, reliée au premier élément de liaison, mobile radialement par rapport à ladite collerette annulaire et au moins une partie décalée dont au moins les déplacements radiaux centripètes sont limités par rapport à ladite collerette annulaire, les deux parties étant décalées selon la direction circonférentielle.

D'autres caractéristiques et avantages ressortiront de la description qui va suivre de l'invention, description donnée à titre d'exemple uniquement, en regard des dessins annexés sur lesquels :
- la figure 1 est une coupe schématique selon un plan radial d'une partie de l'avant d'une nacelle d'aéronef,
- la figure 2 est une vue en perspective illustrant une partie d'une liaison entre un moteur et une entrée d'air d'une nacelle d'aéronef selon l'art antérieur,
- la figure 3A est une coupe illustrant un élément de liaison entre un moteur et une entrée d'air d'une nacelle d'aéronef selon un premier mode de réalisation de l'art antérieur,
- la figure 3B est une coupe illustrant un élément de liaison entre un moteur et une entrée d'air d'une nacelle d'aéronef selon un autre mode de réalisation de l'art antérieur,
- la figure 4 est une vue en perspective d'une partie de la liaison entre un moteur et une entrée d'air d'une nacelle d'aéronef selon une première variante de l'invention,
- la figure 5A est une coupe d'une liaison entre un moteur et une entrée d'air d'une nacelle d'aéronef selon l'invention,
- la figure 5B est une coupe de la liaison illustrée sur la figure 5A après déformation,
- la figure 6 est une vue en perspective d'une partie de la liaison entre un moteur et une entrée d'air d'une nacelle d'aéronef selon une autre variante de l'invention,
- la figure 7A est une vue de face d'une lame selon un premier mode de réalisation de l'invention sans déformation,
- la figure 7B est une vue de face de la lame de la figure 7A avec déformation,
- la figure 8 est une vue de face d'une lame selon un deuxième mode de réalisation, et
- la figure 9 est une vue de face d'une lame selon un troisième mode de réalisation.

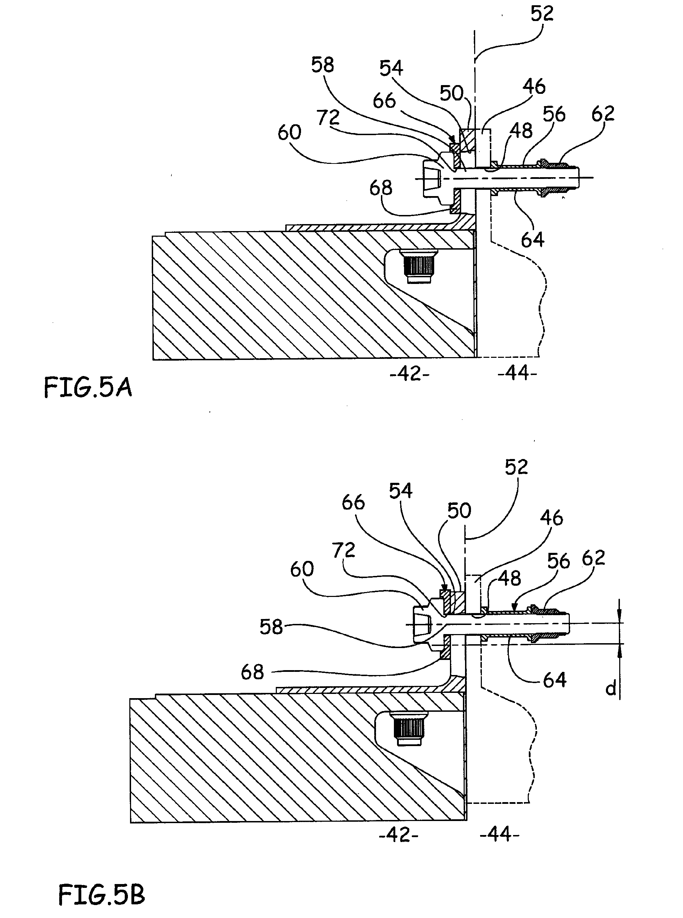

Sur les figures 5A et 5B, on a représenté en coupe la zone de jonction entre un premier conduit d'une entrée d'air 42 et un second conduit d'une motorisation 44 d'une nacelle d'aéronef les deux conduits étant disposés bout-à-bout. Le plan de coupe contient l'axe longitudinal de la nacelle et l'axe d'un élément de liaison.

Selon un mode de réalisation, le dispositif de liaison entre une motorisation et une entrée d'air comprend au niveau de la motorisation une collerette annulaire 46 s'étendant dans un plan sensiblement perpendiculaire à l'axe longitudinal de la nacelle et comportant une pluralité de trous de passage 48, au niveau de l'entrée d'air une collerette annulaire 50 s'étendant dans un plan sensiblement perpendiculaire à l'axe longitudinal de la nacelle, plaquée contre la collerette annulaire 46 de la motorisation au niveau d'un plan de jonction référencé 52 et comportant une pluralité de trous de passage 54 disposés au droit des trous de passage 48 de la motorisation et des éléments de liaison 56 répartis sur la périphérie des collerettes annulaires 46 et 50 logés dans les trous de passage 48 et 54.

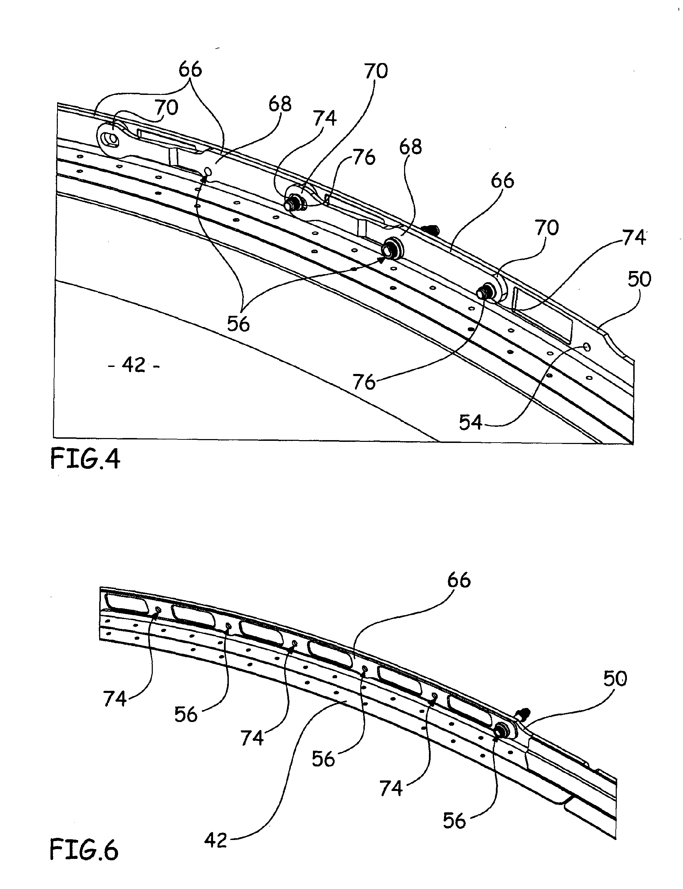

Selon un mode de réalisation, la collerette annulaire peut être réalisée d'un seul tenant avec la motorisation ou l'entrée d'air. En variante, la collerette annulaire peut être une pièce indépendante, assemblée à la motorisation ou à l'entrée d'air. Selon un autre mode de réalisation, la collerette annulaire 50 solidaire de l'entrée d'air est réalisée d'un seul tenant avec une portion de cylindre de manière à former une bride avec une section en L dans un plan longitudinal, comme illustré sur la figure 4. De la même manière, la collerette annulaire 50 peut s'étendre d'un seul tenant sur toute la circonférence ou être constituée de plusieurs secteurs angulaires.

Chaque élément de liaison 56 comprend une tige 58 sous forme d'un cylindre avec à une première extrémité un premier appui 60 susceptible d'être plaqué contre la face libre d'une des collerettes, à l'occurrence la collerette annulaire 50 de l'entrée d'air, et à l'autre extrémité un second appui 62 susceptible d'être plaqué contre la face libre de l'autre collerette, à l'occurrence la collerette annulaire 46 de la motorisation.

Selon un mode de réalisation, un élément de liaison 56 peut se présenter sous la forme d'un boulon, avec d'une part une vis comportant une tige avec à une première extrémité une tête (correspondant au premier appui 60) et à l'autre extrémité un filetage, et d'autre part un écrou (correspondant au second appui 62) se vissant à l'extrémité de la vis.

En variante, l'élément de liaison peut se présenter sous la forme d'un rivet avec une tige comportant à une première extrémité une tête formant un premier appui et dont l'autre extrémité est déformée de manière à former le second appui.

Avantageusement, l'élément de liaison 56 comprend un fourreau déformable 64 qui peut être enfilé sur la tige 58 et interposé entre l'une des collerettes et l'un des appuis. Selon l'exemple illustré, le fourreau déformable 64 est intercalé entre la collerette annulaire 46 de la motorisation et l'appui 62 formé par un écrou de l'élément de liaison. Ce fourreau déformable 64 a un diamètre intérieur ajusté à celui de la tige 58 et comprend en partie centrale une épaisseur relativement faible de manière à pouvoir se déformer, notamment par flambage. Cet agencement permet d'augmenter l'énergie absorbée par déformation du dispositif de liaison et ainsi de limiter la propagation des déformations orientées selon la direction axiale.

L'invention propose un dispositif de liaison permettant d'absorber par déformation plastique et élastique une partie de l'énergie produite lors du choc d'un morceau de pale contre le conduit de la motorisation et de limiter la propagation des déformations, plus particulièrement les déformations radiales, entre le conduit de la motorisation et le conduit de l'entrée d'air. Avantageusement, le dispositif de l'invention permet de limiter également la propagation des déformations selon la direction tangentielle.

L'agencement particulier de l'invention est décrit appliqué à la collerette annulaire 50 solidaire de l'entrée d'air. Il pourrait être appliqué à la collerette annulaire 46 solidaire de la motorisation.

Même s'il est décrit pour un élément de liaison, il s'applique à au moins un élément de liaison 56 et de préférence à tous les éléments de liaison 56.

Selon l'invention, le trou de passage 48 de la collerette annulaire 46 solidaire de la motorisation a un diamètre ajusté au diamètre de la tige 58 de l'élément de liaison 56. Ainsi, le mouvement relatif entre l'élément de liaison 56 et la collerette annulaire 46 est quasi nul. Par ajusté, on entend que le jeu entre le trou de passage 48 et la tige est inférieur ou égal à 2 mm.

En parallèle, le trou de passage 54 de la collerette annulaire 50 a un diamètre nettement supérieur à celui de la tige 58 de manière à permettre à ladite tige 58 un déplacement d supérieur ou égal à 5 mm.

Avantageusement, l'axe du trou de passage 54 est décalé vers l'extérieur par rapport à l'axe du trou de passage 48 de manière à obtenir la course la plus importante sachant que la tige 58 va se déplacer radialement vers l'extérieur en cas de bris d'une pale. En l'absence de déformation, comme illustré sur la figure 5A, la portion de la circonférence du trou de passage 54 la plus proche de l'axe longitudinal de la nacelle est sensiblement à la même hauteur que la portion correspondante de la circonférence du trou de passage 48 alors que la portion de la circonférence du trou de passage 54 la plus éloignée de l'axe longitudinal de la nacelle est décalée vers l'extérieur par rapport à la portion correspondante de la circonférence du trou de passage 48.

Selon l'invention, une lame 66 est intercalée entre au moins un élément de liaison 56 et la collerette annulaire 50, la lame 66 comprenant au moins deux parties, au moins une partie centrale 68, reliée à l'élément de liaison 56, mobile radialement par rapport à ladite collerette annulaire 50 et au moins une partie décalée 70 dont au moins les déplacements radiaux centripètes sont limités par rapport à ladite collerette annulaire 50, les deux parties 68 et 70 étant décalées selon la direction circonférentielle.

La partie centrale 68 comprend un trou de passage 72 dont le diamètre est ajusté à celui de la tige 58 de l'élément de liaison 56.

Selon l'invention, au moins une butée 74 est prévue pour limiter le mouvement de la partie décalée 70 selon une direction radiale centripète.

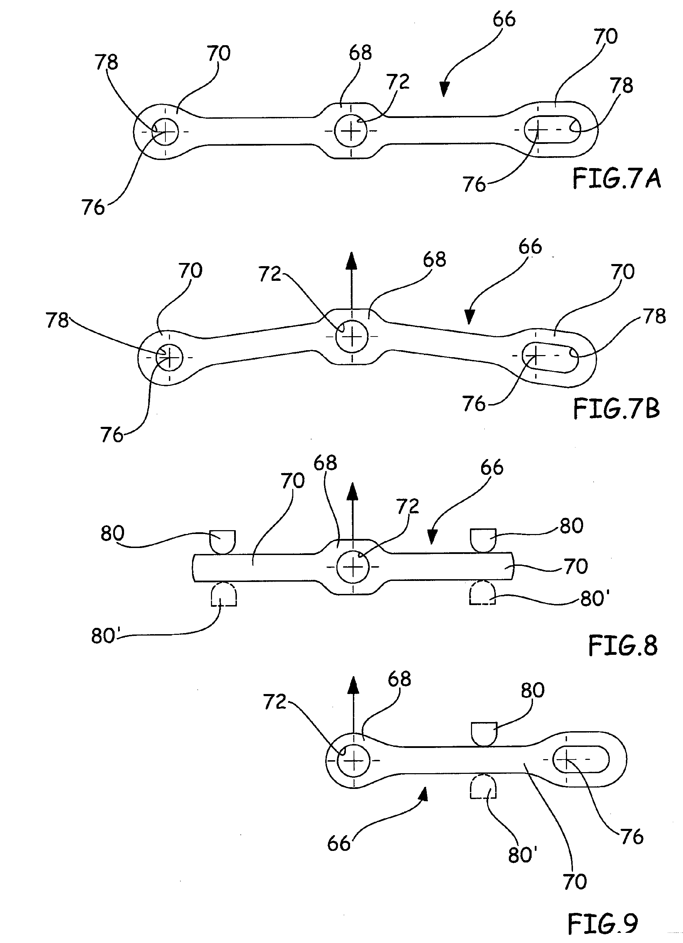

Selon un premier mode de réalisation, la butée 74 comprend une tige d'un élément de liaison 76 solidaire de la collerette annulaire 50. En parallèle, la partie décalée 70 comprend un trou de passage 78 dont la dimension selon la direction radiale est ajustée au diamètre de la tige de l'élément de liaison 76. Cet élément de liaison 76 peut être une vis, un boulon ou un rivet. De préférence, le trou de passage 78 est un trou oblong dont la dimension selon la direction radiale est ajustée au diamètre de la tige de l'élément de liaison 76 alors que la dimension selon la direction circonférentielle est supérieure au diamètre de la tige pour autoriser un mouvement selon la direction circonférentielle de la partie décalée 70 par rapport à l'élément de liaison 76, comme illustré sur les figures 7A et 7B.

Selon un autre mode de réalisation, la butée 74 comprend au moins un élément en saillie 80 solidaire de la collerette annulaire 50 apte à prendre appui contre le bord de la partie décalée 70 orienté vers l'extérieur afin que l'élément en saillie 80 (en trait continu sur les figures 8 et 9) limite le mouvement de la partie décalée 70 selon la direction radiale centripète. En variante, on pourrait envisager deux éléments en saillie 80, 80' (l'élément en saillie 80' étant représenté en pointillé sur les figures 8 et 9) disposés de part et d'autre de la partie décalée 70 selon la direction radiale.

Selon d'autres modes de réalisation, on peut prévoir pour une même lame 66 des butées sous forme d'un élément de liaison 76 et sous forme d'au moins un élément en saillie 80, comme illustré sur la figure 9.

Selon certaines variantes, la lame 66 comprend pour chaque élément de liaison 56 une partie centrale 68 et une seule partie décalée 70 comme illustré sur la figure 9.

Selon d'autres variantes illustrées sur les figures 7A, 7B et 8, la lame 66 comprend une partie centrale 68 pour un élément de liaison 56 et deux parties décalées 70 disposées de part et d'autre de l'élément de liaison 56, les deux parties décalées 70 étant décalées par rapport à l'élément de liaison 56 selon la direction circonférentielle. Avantageusement le trou de passage 78 d'une partie décalée est oblong alors que le trou de passage 78 de l'autre partie décalée est circulaire et ajusté à la section de l'élément de liaison 76.

Selon certaines variantes illustrées sur les figures 4, 7A, 7B, 8 et 9, une lame 66 est prévue pour chaque élément de liaison 56. De préférence, les lames 66 adjacentes ont au moins une butée 74 en commun, comme illustré sur la figure 4. Avantageusement dans ce cas, le trou de passage circulaire d'une première lame se superpose avec le trou de passage oblong d'une seconde lame.

Selon d'autres variantes, une lame peut comprendre plusieurs trous de passage 72 destinés chacun à un élément de liaison 56. Ainsi, selon un mode de réalisation illustré sur la figure 6, plusieurs éléments de liaison 56 sont reliés à la même lame.

En cas de bris de pale, le conduit de la motorisation 44 se déforme radialement, comme illustré sur la figure 5B. Cette déformation provoque un mouvement radial d'au moins un élément de liaison 56 vers l'extérieur de la nacelle. Le trou de passage 54 de la collerette annulaire 50 autorise ce mouvement de l'élément de liaison 56. En parallèle, le trou de passage 72 ayant un diamètre ajusté à celui de la tige de l'élément de liaison 56, la partie centrale 68 de la lame 66 suit le mouvement de l'élément de liaison 56 contrairement à la partie décalée 70 de la lame qui est immobilisée selon la direction radiale et ne peut pas se décaler vers l'extérieur.

Selon une caractéristique de l'invention, la lame exerce un effort sur l'élément de liaison 56 qui est proportionnel au mouvement radial vers l'extérieur de l'élément de liaison 56. Ainsi, plus l'élément de liaison 56 tend à se déplacer vers l'extérieur plus la lame 66 exerce un effort important à l'encontre de ce déplacement. Ainsi, les risques de cisaillement de l'élément de liaison 56 en cas de choc avec la paroi du trou de passage 54 sont limités. A cet effet, la section de la lame, le matériau de la lame, la distance entre l'élément de liaison 56 et la butée 74 la plus proche sont déterminés pour permettre à la lame de se déformer de manière élastique ou plastique radialement et d'exercer sur l'élément de liaison 56 un effort proportionnel au mouvement radial vers l'extérieur dudit élément de liaison 56.

## Revendications

1. Nacelle d'aéronef comprenant un dispositif de liaison entre un premier conduit d'une entrée d'air (42) de ladite nacelle et un second conduit d'une motorisation (44) disposée dans ladite nacelle, les deux conduits étant disposés bout à bout, ledit dispositif de liaison comportant une collerette annulaire (50) reliée à l'entrée d'air, une collerette annulaire (46) reliée à la motorisation plaquée contre ladite collerette annulaire (50) de l'entrée d'air, une pluralité de trous de passage (48, 54) ménagés dans les collerettes annulaires (46, 50) et disposés au droit les uns des autres et des premiers éléments de liaison (56) dont les tiges (58) sont logées dans les trous de passage (48, 54), permettant de relier lesdites collerettes annulaires (46, 50), **caractérisée en ce que** pour au moins un premier élément de liaison (56), le trou de passage (54) d'une des collerettes annulaires (50) a un diamètre nettement supérieur à celui de la tige (58) permettant un débattement de ladite tige (58) et **en ce qu'**une lame (66) est intercalée entre ledit premier élément de liaison (56) et ladite collerette annulaire (50), la lame (66) comprenant au moins deux parties, au moins une partie centrale (68) reliée au premier élément de liaison (56), mobile radialement par rapport à ladite collerette annulaire (50) et au moins une partie décalée (70) dont au moins les déplacements radiaux centripètes sont limités par rapport à ladite collerette annulaire (50), les deux parties (68, 70) étant décalées selon la direction circonférentielle.

2. Nacelle d'aéronef selon la revendication 1, **caractérisée en ce que** la lame (66) exerce un effort sur le premier élément de liaison (56) qui est proportionnel au mouvement radial vers l'extérieur du premier élément de liaison (56).

3. Nacelle d'aéronef selon la revendication 1 ou 2, **caractérisée en ce que** la partie centrale (68) comprend un trou de passage (72) dont le diamètre est ajusté à celui de la tige (58) du premier élément de liaison (56).

4. Nacelle d'aéronef selon l'une des revendications 1 à 3, **caractérisée en ce que** la collerette annulaire (50) supporte au moins une butée (74) pour limiter le mouvement de la partie décalée (70) selon une direction radiale centripète.

5. Nacelle d'aéronef selon la revendication 4, **caractérisée en ce que** la butée (74) comprend une tige d'un second élément de liaison (76) solidaire de la collerette annulaire (50) et **en ce que** la partie décalée (70) de la lame comprend un trou de passage (78) dont la dimension selon la direction radiale est ajustée au diamètre de la tige du second élément de liaison (76).

6. Nacelle d'aéronef selon la revendication 5, **caractérisée en ce que** le trou de passage (78) est oblong, sa plus grande dimension étant orientée selon la direction circonférentielle pour autoriser un mouvement selon la direction circonférentielle de la partie décalée (70) par rapport au second élément de liaison (76).

7. Nacelle d'aéronef selon l'une des revendications 4 à 6, **caractérisée en ce que** la butée (74) comprend au moins un élément en saillie (80) solidaire de la collerette annulaire (50) apte à prendre appui contre le bord de la partie décalée (70) orienté vers l'extérieur.

8. Nacelle d'aéronef selon la revendication 7, **caractérisée en ce que** la butée (74) comprend deux éléments en saillie (80, 80') disposés de part et d'autre de la partie décalée (70) selon la direction radiale.

9. Nacelle d'aéronef selon l'une des revendications précédentes, **caractérisée en ce que** la lame (66) comprend une partie centrale (68) pour un premier élément de liaison (56) et deux parties décalées (70) disposées de part et d'autre dudit premier élément de liaison (56), les deux parties décalées (70) étant décalées par rapport au premier élément de liaison (56) selon la direction circonférentielle.

10. Nacelle d'aéronef selon la revendication 9, **caractérisée en ce que** deux lames adjacentes comprennent une butée (74) commune pour limiter le mouvement des parties décalées (70) des lames adjacentes selon une direction radiale centripète.

11. Nacelle d'aéronef selon l'une des revendications 1 à 8, **caractérisée en ce qu'**une lame comprend plusieurs trous de passage (72) destinés chacun à un premier élément de liaison (56.)

12. Nacelle d'aéronef selon l'une des revendications 1 à 11, **caractérisée en ce que** l'axe: du trou de passage (54) de la collerette annulaire reliée à l'entrée d'air est décalé vers l'extérieur par rapport à l'axe du trou de passage (48) de la collerette annulaire (46) reliée à la motorisation.

## Patentansprüche

1. Gondel eines Luftfahrzeugs mit einer Verbindungsvorrichtung zwischen einem ersten Kanal eines Lufteinlasses (42) der Gondel und einem zweiten Kanal einer Motorisierung (44), die in der Gondel angeordnet ist, wobei die Kanäle aneinandergefügt sind und die Verbindungsvorrichtung einen mit dem Lufteinlass verbundenen ringförmigen Flansch (50) aufweist, einen mit der Motorisierung verbundenen und gegen den ringförmigen Flansch (50) des Lufteinlasses angesetzten ringförmigen Flansch (46), eine Vielzahl von Durchführungslöchern (48, 54), die in den ringförmigen Flanschen (46, 50) ausgebildet und einander gegenüberliegend angeordnet sind, und erste Verbindungselemente (56) aufweist, deren Stifte (58) sich in den Verbindungslöchern (48, 54) befinden und eine Verbindung der ringförmigen Flansche (46, 50) gestattet, **dadurch gekennzeichnet, dass** für wenigstens ein Verbindungselement (56) das Durchführungsloch (54) von einem der ringförmigen Flansche (50) einen Durchmesser aufweist, der deutlich größer als derjenige des Stifts (58) ist, was einen Ausschlag des Stifts (58) gestattet, und dass eine Leiste (66) zwischen dem ersten Verbindungselement (56) und dem ringförmigen Flansch (50) angeordnet ist, wobei die Leiste (66) wenigstens zwei Abschnitte aufweist, einen zentralen Abschnitt (68), der mit dem ersten Verbindungselement (56) verbunden ist und bezüglich des ringförmigen Flansches (50) in radiale Richtung beweglich ist, und wenigstens einen abgesetzten Abschnitt (70), bei dem wenigstens die zentripetalen Radialbewegungen bezüglich des ringförmigen Flansches (50) begrenzt sind, und wobei die beiden Abschnitte (68, 70) in Umfangsrichtung im Abstand angeordnet sind.

2. Gondel eines Luftfahrzeugs nach Anspruch 1, **dadurch gekennzeichnet, dass** die Leiste (66) eine Belastung auf das erste Verbindungselement (56) ausübt, die proportional zur radialen Bewegung nach außen des ersten Verbindungselements (56) ist.

3. Gondel eines Luftfahrzeugs nach Anspruch 1 oder 2, **dadurch gekennzeichnet, dass** der zentrale Abschnitt (68) ein Durchführungsloch (72) aufweist, dessen Durchmesser an denjenigen des Stifts (58) des ersten Verbindungselements (56) angepasst ist.

4. Gondel eines Luftfahrzeugs nach einem der Ansprüche 1 bis 3, **dadurch gekennzeichnet, dass** der ringförmige Flansch (50) wenigstens einen Anschlag (74) hält, um die Bewegung des abgesetzten Abschnitts (70) in eine zentripetale Radialbewegung zu beschränken.

5. Gondel eines Luftfahrzeugs nach Anspruch 4, **dadurch gekennzeichnet, dass** der Anschlag (74) den Stift eines zweiten Verbindungselements (76) umfasst, der am ringförmigen Flansch (50) angebracht ist, und dass der abgesetzte Abschnitt (70) der Leiste ein Durchführungsloch (78) aufweist, dessen Abmessung in radiale Richtung an den Durchmesser des Stifts des zweiten Verbindungselement (76) angepasst ist.

6. Gondel eines Luftfahrzeugs nach Anspruch 5, **dadurch gekennzeichnet, dass** das Durchführungsloch (78) länglich ausgebildet ist, wobei dessen größte Abmessung in Umfangsrichtung ausgerichtet ist, um eine Bewegung in Umfangsrichtung des abgesetzten Abschnitts (70) bezüglich des zweiten Verbindungselements (76) zu ermöglichen.

7. Gondel eines Luftfahrzeugs nach einem der Ansprüche 4 bis 6, **dadurch gekennzeichnet, dass** der Anschlag (74) wenigstens ein vorspringendes Element (80) aufweist, das am ringförmigen Flansch (50) angebracht ist und das dazu eingerichtet ist, gegen den nach außen gerichteten Rand des abgesetzten Abschnitts (70) zu stoßen.

8. Gondel eines Luftfahrzeugs nach Anspruch 7, **dadurch gekennzeichnet, dass** der Anschlag (74) zwei vorspringende Elemente (80, 80') aufweist, die in radiale Richtung beiderseits des abgesetzten Abschnitts (70) angeordnet sind.

9. Gondel eines Luftfahrzeugs nach eine der vorhergehenden Ansprüche, **dadurch gekennzeichnet, dass** die Leiste (66) einen zentralen Abschnitt (68) für ein erstes Befestigungselement (56) und zwei abgesetzte Abschnitte (70) aufweist, die beiderseits des ersten Verbindungselements (56) angeordnet sind, wobei die beiden abgesetzten Abschnitte (70) in Umfangsrichtung bezüglich des ersten Verbindungselements(56) im Abstand angeordnet sind.

10. Gondel eines Luftfahrzeugs nach Anspruch 9, **dadurch gekennzeichnet, dass** zwei benachbarte Leisten einen gemeinsamen Anschlag (74) aufweisen, um die Bewegung der abgesetzten Abschnitte (70) der benachbarten Leisten in eine zentripetale Radialrichtung zu begrenzen.

11. Gondel eines Luftfahrzeugs nach einem der Ansprüche 1 bis 8, **dadurch gekennzeichnet, dass** eine Leiste mehrere Durchführungslöcher (72) aufweist, die jeweils für ein erstes Verbindungselement (56) bestimmt sind.

12. Gondel eines Luftfahrzeugs nach einem der Ansprüche 1 bis 11, **dadurch gekennzeichnet, dass** die Achse des Durchführungsloches (54) des mit dem Lufteinlass verbundenen ringförmigen Flansches bezüglich der Achse des Durchführungsloches (48) des mit der Motorisierung verbundenen ringförmigen Flansches (46) nach außen versetzt ist.

## Claims

1. Aircraft nacelle comprising an Aircraft nacelle between a first aircraft nacelle air intake conduit (42) and a second conduit (44) of a powerplant installed in said nacelle, the two conduits being installed end-to-end, said Aircraft nacelle including an annular flange (50), linked to the air intake, an annular flange (46) linked to the powerplant pressed up against said air intake annular flange (50), a multiplicity of holes (48,54) arranged in the annular flanges (46, 50) and disposed in a straight line and some first connectors (56) whose shanks (58) are inserted into the holes (48,54), allowing the link-up of said annular flanges (46,50), **characterized in that** for at least one first connector (56), the hole (54) of one of the annular flanges has a diameter clearly greater than that of the shank (58) allowing play of said shank (58) and **in that** a strip (66) is interposed between said first connector (56) and said annular flange (50), the strip (66) comprising of at least two parts, at least one central part (68) linked to the first connector (56), radially mobile relative to said annular flange (50) and at least one offset part (70) whose at least centripetal radial at least are limited relative to said annular flange (50), the two parts (68,70) being displaced in the direction of the circumference.

2. Aircraft nacelle according to claim 1, **characterized in that** the strip (66) exerts a force on the first connector (56) that is proportional to the radial movement towards the exterior of the connector (56).

3. Aircraft nacelle according to claims 1 and 2, **characterized in that** the central part (68) comprises a passage hole (72) whose diameter is adjusted to that of the shank (58) of the first connector (56).

4. Aircraft nacelle according to any of the claims 1 to 3, **characterized in that** the annular flange (50) supports at least one stop (74) to limit the movement of the offset part (70) along a centripetal radial direction.

5. Aircraft nacelle according to claim 4, **characterized in that** the stop (74) comprises a shank of a second connector (76) integral to the annular flange (50) and **in that** the offset part (70) of the strip comprises a passage hole (78) whose dimension in the radial direction is adjusted in diameter to that of the shank of the second connector (76).

6. Aircraft nacelle according to claim 5, **characterized in that** the passage hole (78) is oblong, its largest dimension being oriented along the circumferential direction so as to allow movement in the circumferential direction of the offset part (70) relative to the second connector (76).

7. Aircraft nacelle according to any of claims 4 to 6, **characterized in that** the stop (74) comprises at least one raised element (80) integral with the annular flange (50) able to bear against the edge of the offset part (70) oriented towards the exterior.

8. Aircraft nacelle according to claim 7, **characterized in that** the stop (74) comprises two raised elements (80,80') disposed either side of the offset part (70) oriented towards the exterior.

9. Aircraft nacelle according to any of the preceding claims, **characterized in that** the strip (66) comprises a central part (68) for a first connector (56) and two offset parts (70) disposed either side of the said first connector (56), the two offset parts (70) being offset relative to the first connector (56) along the direction of the circumference.

10. Aircraft nacelle according to claim 9, **characterized in that** two adjacent strips comprise a stop (74) in common, to limit the movement of the offset parts (70) of the adjacent strips in a centripetal radial direction.

11. Aircraft nacelle according to any of claims 1 to 8, **characterized in that** a strip includes several passage holes (72) each planned for a first connector (56).

12. Aircraft nacelle according to any of claims 1 to 11, **characterized in that** the axis of passage hole (54) of the annular flange connected to the air intake is offset towards the exterior relative to the axis of passage hole (48) of the annular flange (46) connected to the powerplant.
